# EUROPEAN PATENT APPLICATION

(11) **EP 4 683 426 A1**
(43) Date of publication of application: **21.01.2026**
(21) Application number: 24769961.4
(22) Date of filing: 13.03.2024
(51) Int. Cl.: H05B 3/34

(54) **ELECTRIC HEATING FILM, ELECTRIC DEVICE, VEHICLE LAMP ASSEMBLY, RADOME, AND VEHICLE**

(30) Priority: 13.03.2023 CN 202310242875; 13.03.2023 CN 202320483885 U; 18.12.2023 CN 202311748663; 18.12.2023 CN 202323461436 U
(71) Applicant: Huizhou Mesh Sensor Technology Co., Ltd., Huizhou, Guangdong 516025 (CN)
(72) Inventor: LIAN, Rong, Huizhou, Guangdong 516025 (CN)
(74) Representative: Murgitroyd & Company
(86) International application number: PCT/CN2024/081425
(87) International publication number: WO 2024/188270

(57) **Abstract**

Disclosed are an electric heating film. The electric heating film includes a substrate and a first conductive mesh. The first conductive mesh is patterned on a side of the substrate in a first direction, and configured to generate heat under an energized condition. A plurality of breakpoints are distributed unevenly in the first conductive mesh. By appropriately configuring the distribution of the breakpoints in the first conductive mesh, the heating rate distribution of the first conductive mesh may be better adapted to specific application requirements.

## Description

### TECHNICAL FIELD

The present disclosure relates to the field of electric heating technologies, and in particular, to an electric heating film, electrical equipment, a vehicle lamp assembly ,radome and a vehicle.

### BACKGROUND

In winter outdoor environments, objects' surfaces are usually covered with ice/snow after rain or snow (particularly freezing rain), which impedes the activation or operation of the objects covered with ice/snow. Therefore, a standard practice in this field is to arrange rows of metal wires in target areas and melt the ice/snow in the target areas by energizing the wires for heating.

However, due to the relatively wide distance between the adjacent metal wires and faster temperature drop in colder weather, the effective heating range of the metal wires is confined to their immediate vicinity. The areas located between the adjacent metal wires and farther from the metal wires often experience thermal decay due to the ambient temperature, making rapid heating difficult. As a result, rapid melting of ice/snow across the entire area cannot be achieved. If attempting to accelerate melting by raising the metal wire temperature, the overheated wires may damage their supporting components.

### SUMMARY

An objective of the present disclosure is to address the issue in prior art where metal wires fail to achieve rapid ice/snow melting.

In the first aspect, the present disclosure provides an electric heating film. The electric heating film includes a substrate and a first conductive mesh. The first conductive mesh is patterned on a side of the substrate in a first direction, and configured to generate heat under an energized condition. A plurality of breakpoints are distributed unevenly in the first conductive mesh.

The electric heating film disclosed herein features a first conductive mesh with relatively fine and densely arranged mesh lines, which enables rapid thermal conduction across the entire film surface upon energization, facilitating quickly melting ice/snow over the entire area. In addition, the uneven distribution of breakpoints within the first conductive mesh results in a corresponding non-uniform distribution of its sheet resistance. In areas with higher density of the breakpoints, the number of effective conduction paths per unit area are fewer, resulting in higher sheet resistance. Conversely, in areas with lower density of the breakpoints, the number of effective conduction paths per unit area are more numerous, resulting in lower sheet resistance. Under identical conditions, areas with higher sheet resistance heat more slowly, while those with lower sheet resistance heat faster. That is to say, the distribution of the sheet resistance of the first conductive mesh relates to the distribution of heating rate. In the electric heating film provided by the present disclosure, by appropriately configuring the distribution of the breakpoints in the first conductive mesh, the heating rate distribution of the first conductive mesh may be better adapted to specific application requirements. It may be seen that the disclosed electric heating film may better adapt to the specific application requirements. In addition, the disclosed method-by distributing an uneven patterned of the breakpoints within the first conductive mesh-offers comparatively lower processing costs and reduced manufacturing complexity than alternative approaches for configuring the sheet resistance

In an exemplary embodiment, the electric heating film further includes a pair of first electrode strips electrically connected to the first conductive mesh. The pair of first electrode strips disposed on two sides of the first conductive mesh in a second direction orthogonal to the first direction. The pair of first electrode strips extend along a third direction orthogonal to both the first direction and the second direction. Along the third direction, the density of the breakpoints gradually increases as the distance to a first connecting line connected between electrode contacts of the first electrode strips decreases.

The closer a point to the first connecting line, the shorter the conduction path of the first conductive mesh becomes, which may cause the electric heating film to heat up faster in areas closer to the first connecting line in the third direction, potentially leading to uneven heating. For example, when the part of the electric heating film far from the first connecting line has not fully melted ice/snow, the part of the electric heating film close to the first connecting line may already have become so hot that it damages the components supporting it.

In the above implementation, along the third direction, the closer a point to the first connecting line, the higher the density of breakpoints becomes, which results in fewer effective conduction paths in the first conductive mesh close to the first connecting line along the third direction. With this configuration, the uneven heating issue of the electric heating film may be effectively mitigated.

In an exemplary embodiment, along the third direction, the resistance of each first electrode strip increases as the distance to the electrode contact of the first electrode strip decreases.

In the present disclosure, adjusting resistance to regulate current entering the first conductive wire mesh through the first electrode strip-specifically, by configuring the portion of the first electrode strip closer to the electrode contact with higher resistance than the portion farther from it reduces current flow in the portion of the first conductive wire mesh near the first connecting line. This consequently lowers the heating rate of the corresponding portion of the electric heating film near the first connecting line, thereby further mitigating uneven heating issues in the electric heating film.

In an exemplary embodiment, along the third direction, the width and/or thickness of each first electrode strip decreases as the distance to the electrode contact of the first electrode strip decreases. This configuration results in a corresponding increase in the electrical resistance of each first electrode strip as it approaches the contact in the third direction. Alternatively, in other implementations, the resistance of the first electrode strips may be adjusted through different means-for example, by modifying the material composition of the strips themselves.

In an exemplary embodiment, each first electrode strip includes a first segment and a second segment; for each first electrode strip, the first segment is closer to the electrode contact of the first electrode strip than the second segment in the third direction, and the resistance of the second segment is lower than that of the first segment. This structure helps reduce current in a part of the first conductive mesh closer to the first connecting line (i.e., a part of the first conductive mesh located between the first segment of the first electrode strips), thereby helping to lower a heating rate of the part of the electric heating film closer to the first connecting line, and further improving the uneven heating issue of the electric heating film. As an example, the first segment may be narrower and/or thinner, and the second segment may be wider and/or thicker.

In an exemplary embodiment, the electric heating film includes a first area and a second area surrounding the first area, and in the second area, the density of the plurality of breakpoints gradually decreases as the distance to the first area decreases.

Since the density of the breakpoints of the first conductive mesh in the second area gradually decreases as it approaches the first area, the heating rate of the electric heating film in the second area gradually increases as it approaches the first area. This structure is better suited for certain application requirements, such as melting ice/snow covering a lamp or in the radar aperture zone of a vehicle.

In an exemplary embodiment, the electric heating film is configured to be attachable to an area in which a radar transmitting surface of a vehicle is disposed, wherein the first area is adaptively aligned with the radar aperture zone, wherein the first conductive mesh circumvents the first area. That is, the first conductive mesh is arranged in the second area but not in the first area. That is, there is no first conductive mesh in the first area.

The first conductive mesh circumvents the first area, and during use, the first area is aligned with a radar aperture zone. Therefore, the electric heating film causes minimal or no obstruction to the transmission signal of the radar, and thus the electric heating film does not weaken, or minimally weakens, the transmission signal of the radar. Thus, this structure is beneficial for ensuring the strength of the transmission signal of the radar when the electric heating film is in use.

After the vehicle starts, it is necessary to quickly melt ice/snow on the radar aperture zone, that is, to quickly melt the ice/snow over the first area. Since the first area does not contain the first conductive mesh, it is necessary to rely on the heat transferred from the second area to melt the ice/snow over the first area, so a part of the second area close to the first area needs to heat up quickly. According to the electric heating film provided by this disclosure, the breakpoints density of the first conductive mesh in the second area gradually decreases as it approaches the first area, which makes the part of the second area close to the first area heat up faster, thereby quickly melting the ice/snow over the first area. In addition, according to this structure, although the part of the second area close to the first area heats up faster, the thermal energy needs to be transferred to the first area to elevate temperature of the first area, which makes the temperature distribution of the entire electric heating film relatively uniform.

In an exemplary embodiment, the electric heating film further includes an connector electrically connected to the first conductive mesh, and configured for connecting to the control unit of the vehicle, the first conductive mesh is configured to switch, under control of the control unit, between: a first operating mode in which the first conductive mesh generates heat; and a second operating mode in which the first conductive mesh functions as a receiving antenna for the radar.

In this implementation, the first conductive mesh may be used to achieve the heating function to melt ice/snow, and may also be used as the receiving antenna for radar when not heating. The same product, namely the electric heating film, may achieve different effects in different operating modes. Therefore, the product achieves multiple functions, improving its cost-performance ratio.

In an exemplary embodiment, the electric heating film is configured to be attachable to a lamp, the first area is optically aligned with the light source of the lamp, where the density of the plurality of breakpoints in the first area is lower than that in the second area.

When starting the vehicle at night, if the lamp is covered by ice/snow, it will seriously affect the lighting effect, thereby causing safety issues. According to the above implementation, the density of the plurality of breakpoints in the first area is less than that in the second area, the density of the plurality of breakpoints of the first conductive mesh in the second area gradually decreases as it approaches the first area, which makes the first area and the part of the second area close to the first area heat up faster. When in use, aligning the first area with the light source of the lamp may ensure that the ice/snow blocking the light source are quickly melted, thereby shortening the starting time of the vehicle and ensuring driving safety.

In an exemplary embodiment, a line width of the first conductive mesh ranges from 1 to 12 µm.

On one hand, the relatively fine lines of the first conductive mesh enable a higher density distribution, which is beneficial for improving the heating rate of the electric heating film. On the other hand, for visual perspective, when the line width is between 1 and 12 µm, the mesh becomes visually imperceptible to the naked eye, achieving overall transparency and enhancing an aesthetic appeal.

In an exemplary embodiment, the first conductive mesh has apertures with an average aperture size ranging from 50 µm to 2000 µm.

By adopting the above range, on one hand, this approach prevents the temperature drop caused by excessively large line spacings, and on the other hand, this approach avoids reduced overall transparency of the electric heating film due to optical merging of adjacent lines. In other words, by adopting the above ranges, the specified range optimally balances heating rate and visual performance.

The electric heating film provided by this disclosure further includes a second conductive mesh and a pair of second electrode strips. the second conductive mesh is patterned on one side of the substrate along the first direction and electrically connected to the first conductive mesh. The second conductive mesh is formed within a radar area defined in the substrate and corresponding to a window of millimeter-wave radar. The pair of second electrode strips are disposed on two ends of the second conductive mesh and configured to generate heat under an energized condition. The second conductive mesh includes first conductive wires and second conductive wires. The first conductive wires are arranged along the second direction orthogonal to the first direction. Any two adjacent first conductive wires among the first conductive wires are electrically connected by at least one second conductive wire.

When a truncation occurs on a first conductive wire, causing localized disconnection of the metal conductor, current cannot pass through the segmented portions of the first conductive wire (divided into two or more sections). As a result, the area covered by this current path will fail to generate heat, inevitably reducing the heating uniformity of the electric heating film on the radar window. This disclosure arranges a second conductive wire between two first conductive wires, enabling the two first conductive wires to be interconnected through at least one second conductive wire. In this way, when current flowing through a first conductive wire encounters a break, it may transfer to an adjacent first conductive wire via the second conductive wire, ensuring that the area covered by the disconnected segment of the first conductive wire may still generate heat. This correspondingly improves the heating uniformity of the electric heating film on the radar window. As the number of second conductive wires increases, multiple disconnected segments of first conductive wires (caused by breaks) may also become conductive. Consequently, the heating uniformity of the electric heating film on the radar window progressively improves. This also enhances the production yield of the electric heating film. Thus, even when the first conductive wires in the electric heating film are designed with finer diameters and narrower spacing, a balanced optimization may be achieved between radar signal blockage area and heating uniformity on the radar window.

In an exemplary embodiment, the second conductive mesh is a grid mesh including mesh apertures, each mesh aperture is formed by two adjacent first conductive wires and two adjacent second conductive wires connected to the two adjacent first conductive wires.

When a truncation occurs in a first conductive wire, the two second conductive wires in the corresponding mesh aperture may provide alternative current paths to reconnect the severed segments of the first conductive wire. This enhances the heating uniformity of the electric heating film across the radar window. As more mesh apertures are incorporated, additional discontinuous segments of first conductive wires caused by truncations become interconnected. Consequently, the heating uniformity of the electric heating film on the radar window progressively improves.

In an exemplary embodiment, in each mesh aperture, the two adjacent second conductive wires are parallel to each other, a distance between the two adjacent second conductive wires defines a first distance, wherein the first distance ranges from 1/8 to 3 times a wavelength of the radar.

Typically, when a radar signal encounters an obstruction during transmission, the signal wave is partially blocked, resulting in reduced wave transparency. However, even when partially blocked, the signal may still meet the radar's basic transmission and reception requirements to a certain extent. Within the first distance range provided in this disclosure, the grid mesh structure ensures minimal wave transparency, thereby meeting the radar wave transparency and reception needs. while ensuring the minimum conduction effect of the grid mesh, i.e., it fulfills the basic conditions required for conductivity.

In an exemplary embodiment, the second conductive mesh is a grid mesh including mesh apertures, each mesh aperture is formed by two adjacent first conductive wires and two adjacent second conductive wires connected to the two adjacent first conductive wires, where the adjacent mesh apertures are arranged alternately along the second direction. That is, along the second direction, each mesh aperture is not aligned with the adjacent next mesh aperture, meaning that the second conductive wire of each mesh aperture is not directly connected to the second conductive wire of the adjacent next mesh aperture.

In the manufacturing process of grid mesh conductors, etching is typically employed as the processing method. This process forms "webbed" structures at wire intersections, causing an increase in the intersection area, which may become visible to the naked eye under certain conditions. As the number of intersections increases, these "webbed" structures multiply accordingly, thereby affecting the overall visual effect of the grid mesh.

To reduce the area of the " webbed " structures, the present disclosure arranges the adjacent mesh apertures alternately along the second direction, ensuring that only one second conductive wire is connected at any position on the first conductive wire, resulting in each intersection being a "T"-shaped intersection. Compared to a "cross"-shaped intersection, the " webbed " structures at the "T"-shaped intersection has a smaller area, thereby reducing the likelihood of the " webbed " structures being noticeable to the human eye at the intersections.

In an exemplary embodiment, the mesh aperture is rectangular. That is, the first conductive wires are straight and parallel to each other. Since the signal emitted by the millimeter-wave radar is a sinusoidal wave signal, the projection of the sinusoidal wave signal on the grid mesh structure appears as a straight line when passing through the grid mesh. Given that the first conductive wires are straight and parallel to each other, the orientation of the first conductive wires may be aligned parallel to the projection direction of the sinusoidal wave signal on the grid mesh. Therefore, the first conductive wires 162' arranged in the same direction allow radar signals to pass through an electric heating film to a great extent without being interrupted by the first conductive wires.

In an exemplary embodiment, in the mesh aperture, a distance between the two second conductive wires defines a first distance, and a distance between the two first conductive wires defines a second distance, wherein the first distance is 2.5mm and the second distance is 0.2mm.

Testing has verified that a first distance of 2.5mm and a second distance of 0.2mm may meet the penetration requirements for multiple-wavelength millimeter-wave radar beams

(especially 77GHz millimeter-wave radar) through the mesh apertures, while maintaining high heating uniformity of the electric heating film on the radar window.

In an exemplary embodiment, the mesh aperture is hexagonal. During the etching process, the longer the side length, the higher the probability of truncations occurring. To ensure the visual effect and wave transparency of the grid mesh without adding a second conductive wire, the grid mesh is designed as a hexagon to reduce the occurrence of truncations.

In an exemplary embodiment, in the mesh aperture, an angle between any adjacent sides is less than 180°. That is, in the mesh aperture, the two first conductive wires are bent opposite orientations along the second direction. This allows the mesh aperture to increase the area of the mesh aperture while maintaining the length of the second conductive wires and the distance between the two second conductive wires. While maintaining a high conduction effect in a grid mesh, the wave transmission rate of the mesh aperture is improved.

In an exemplary embodiment, in the mesh aperture, a third distance is defined by a distance between two hexagonal vertices on the two first conductive wires, where the vertices are positioned between the two second conductive wires. The third distance is twice the length of the second conductive wires. Tests have shown under the same etching conditions, the third distance and the length of the second conductive wire in this relationship may maintain a high conduction effect for the grid mesh, thereby achieving an optimal balance between the radar signal's occlusion area and the heating uniformity of the electric heating film on the radar window.

In an exemplary embodiment, the second conductive mesh is formed with breakpoints, which the breakpoints are distributed unevenly. The density of the plurality of breakpoints gradually increases as the distance to a second connecting line between electrode contacts of the first electrode strips decreases.

The closer to the second connecting line, the shorter the conductive path of the second conductive mesh. This may cause the heating speed of the electric heating film to increase as the distance decreases in the direction perpendicular to the second connecting line, leading to uneven heating. For example, when the area of the electric heating film far from the second connecting line has not yet completely melted ice and snow, the area near the second connecting line may overheat and damage its supporting structure. In this disclosure, by optimizing the distribution of density of the breakpoints, the number of effective conductive paths in the second conductive mesh decreases as the distance to the second connecting line decreases in the perpendicular direction. According to this structure, the issue of uneven heating of the electric heating film may be effectively mitigated.

In an exemplary embodiment, the resistance of each second electrode strip increases as the distance to its electrode contact decreases.

In the present disclosure, the current flowing through the second electrode strip into the grid mesh is controlled by adjusting the resistance. Specifically, the resistance of the portion of the second electrode strip closer to the electrode contact is set higher than that of the portion farther from the electrode contact. This reduces the current at the second connecting line between the electrode contacts of a pair of second electrode strips in the grid mesh. As a result, the heating rate of the electrothermal film near the second connecting line is reduced, thereby helping to mitigate the issue of uneven heating in the electrothermal film.

In the first aspect, this disclosure also provides an electrical equipment, which includes a lamp and the aforementioned electric heating film, such as a display.

In the second aspect, this disclosure also provides a vehicle lamp assembly, which includes a lamp and the aforementioned electric heating film. For example, the electric heating film may be attached to a lampshade of the lamp.

In the third aspect, the present disclosure also provides a radome, including the electric heating film as described above.

In the forth aspect, the present disclosure also provides a vehicle, which includes the electric heating film as described above, or includes the vehicle lamp assembly as described above, or includes the radome as described above.

### BRIEF DESCRIPTION OF THE DRAWINGS

In order to more clearly illustrate the technical solutions of the embodiments of the present disclosure, the drawings required for the embodiments will be briefly introduced below.

It should be understood that the following drawings only show some embodiments of the present disclosure, not all of them, and therefore should not be regarded as limiting the scope.

It should be understood that the same or similar reference numerals are used in the drawings to indicate the same or similar elements.

It should be understood that the drawings are schematic, the dimensions and proportions of the elements in the drawings are not necessarily accurate.
FIG. 1 is a schematic cross-sectional view of an electric heating film according to an embodiment of the present disclosure.
FIG. 2 is a schematic structural diagram of the electric heating film shown in FIG. 1.
FIG. 3 is a schematic structural diagram of an electric heating film according to another embodiment of the present disclosure.
FIG. 4 is a schematic structural diagram of an electric heating film according to another embodiment of the present disclosure.
FIG. 5 is a schematic structural diagram of an electric heating film according to another embodiment of the present disclosure.
FIG. 6 is a schematic structural diagram of a first conductive mesh of an electric heating film according to another embodiment of the present disclosure.
FIG. 7 is a schematic structural diagram of a first conductive mesh of an electric heating film according to another embodiment of the present disclosure.
FIG. 8 is a schematic structural diagram of an electric heating film according to another embodiment of the present disclosure.
FIG. 9 is another schematic cross-sectional view of an electric heating film according to an embodiment of the present disclosure, in which a first conductive mesh is not shown.
FIG. 10 is a schematic diagram of the cooperation between an electric heating film and a radar in one perspective according to an embodiment of the present disclosure.
FIG. 11 is a schematic diagram of the cooperation between an electric heating film and a radar in another perspective according to an embodiment of the present disclosure.
FIG. 12 is a partially enlarged schematic view of the part Q in FIG. 10, showing the current path.
FIG. 13 is a schematic structural diagram of a first heating device according to another embodiment of the present disclosure.
FIG. 14 is a schematic structural diagram of a first heating device according to still another embodiment of the present disclosure.
FIG. 15 is a schematic diagram of a mesh aperture arrangement.
FIG. 16 is a schematic diagram of another mesh aperture arrangement.
FIG. 17 is a schematic structural diagram of a first heating device according to yet another embodiment of the present disclosure.
FIG. 18 is a schematic diagram of a mesh aperture in the mesh aperture structure shown in FIG. 17.
FIG. 19 is a schematic structural diagram of a first heating device according to an embodiment of the present disclosure.

### DETAILED DESCRIPTION OF THE EMBODIMENTS

The technical solutions in the present disclosure will be described clearly and completely in conjunction with the accompanying drawings. Obviously, the described embodiments are only a part of the embodiments of the present disclosure, not all of them. Therefore, the implementation of the present disclosure is not limited to the following.

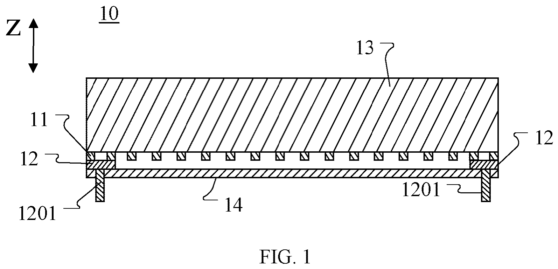

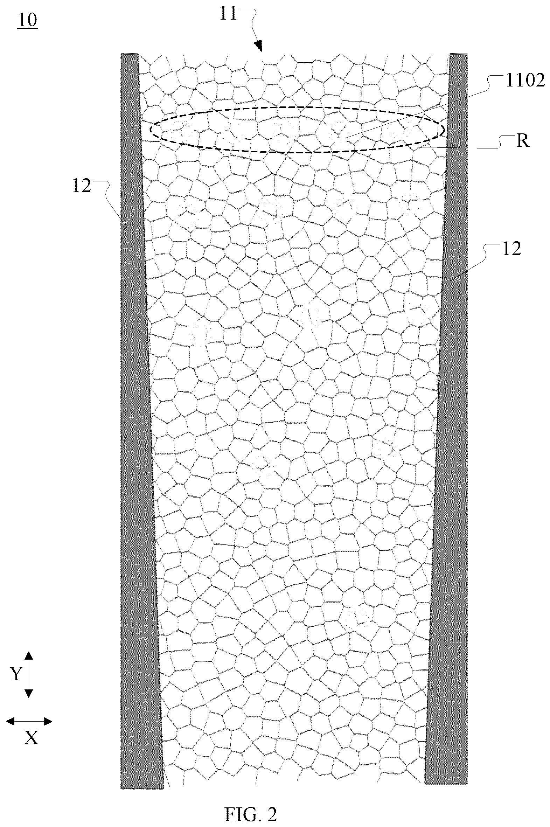

FIG. 1 and FIG. 2 are schematic diagrams of an embodiment of the present disclosure, where FIG. 1 is a schematic cross-sectional view of an electric heating film 10 in a first conductive mesh 11 portion according to an embodiment of the present disclosure. The electric heating film 10 includes a substrate 13 and the first conductive mesh 11 in a first direction Z (i.e., the thickness direction of the electric heating film 10). The first conductive mesh 11 may be patterned on one side of the substrate 13, and configured to generate heat under an energized condition. A plurality of breakpoints are distributed unevenly in the first conductive mesh. The conductive mesh may also be referred to as heating circuit.

For example, the substrate 13 may be made of materials with good light transmittance and non-conductivity, such as PC (polycarbonate), PET (polyethylene glycol terephthalate), or glass.

The first conductive mesh 11 may be formed on the substrate 13 by etching. Of course, in other examples, a first conductive mesh 11 may also be formed in other ways.

Lines of the first conductive mesh 11 may be made of materials with good flexibility, low cost, and good ductility, such as copper.

The electric heating film 10 may further include a protective layer 14, which may cover a side of the first conductive mesh 11 facing away from the substrate 13, providing protection for the first conductive mesh 11. In a second direction X orthogonal to the first direction Z, the edges of the first conductive mesh 11 may be provided with a pair of first electrode strips 12, and the pair of first electrode strips 12 are electrically connected to the vehicle power supply via electrode contacts 1201, allowing the vehicle to power the first conductive mesh 11 via the electrode contacts 1201. That is to say, the electrode contacts 1201 are used to connect the first electrode strips 12 to the electrode lead of the power supply that corresponds to the first electrode strips. In one example, at least a portion of electrode contacts 1201 may be integrally formed with first electrode strips 12.

FIG. 2 is a schematic structural diagram of a structure of an electric heating film 10. A plurality of breakpoints. are distributed unevenly in the first conductive mesh. By varying the density of these breakpoints, the conductive properties of different mesh regions may be modified, thereby modifying the heating effects in different areas of the first conductive mesh 11.

If it is desired to reduce heating rate in a certain region (such as a region R in FIG. 2), more breakpoints 1102 are arranged in the first conductive mesh 11 of that region, reducing the effective path of the first conductive mesh 11 in that region, increasing the sheet resistance, lowering heating rate, and conversely likewise. may By appropriately configuring the distribution of the breakpoints 1102 in first conductive mesh 11 through the above implementation, the heating rate of the electric heating film 10 may better adapt to specific applications.

As an example, breakpoints 1102 may be formed in a first conductive mesh 11 through a DUMMY method.

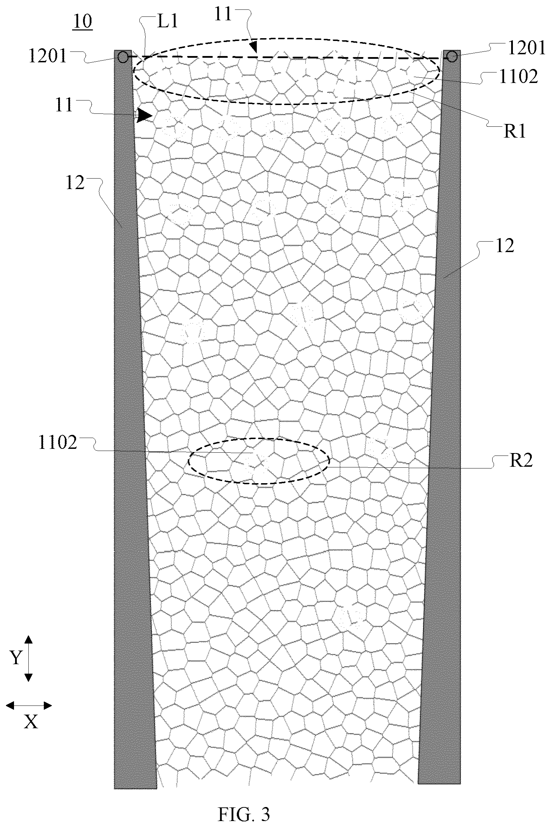

FIG. 3 is a schematic diagram of another embodiment of the present disclosure, a pair of first electrode strips 12 are disposed on two sides of a first conductive mesh 11 in a second direction X orthogonal to the first direction Z, and the pair of first electrode strips 12 extend along a third direction Y orthogonal to both the first direction Z and the second direction X. Along the third direction Y, the density of the breakpoints 1102 gradually increases as the distance to a first connecting line L1 between electrode contacts of the first electrode strips decreases.

Experimental studies show that the area containing the first connection line (L1) of electrode contacts 1201 in first conductive mesh 11 has the shortest current path, resulting in the most rapid temperature rise and the highest heating level during operation. Under continuous heating, this L1-adjacent area may overheat and damage its supporting components before the ice/snow covering more distant sections fully melts.

When the electrode contacts 1201 are set at one end of the first electrode strips 12. In the first conductive mesh 11, the heating rate of the first conductive mesh 11 gradually decreases from the area near the first connecting line L1 to the end far from the first connecting line L1, and the temperature distribution is also uneven. Therefore, as shown in FIG. 3, the breakpoints 1102 may be distributed to gradually decrease along the third direction Y from the area close to the first connecting line L1 towards the end away from the first connecting line L1 (as shown in R1 and R2 in FIG. 3), which results in fewer effective conduction paths in the first conductive mesh 11 close to the first connecting line L1 along the third direction Y, ensuring that when the region of the first conductive grid 11 farther from the first connecting segment L1 achieves the desired heating effect, the area near the first connecting line L1 does not overheat and damage the supporting structure supporting it. Through the above implementation, the arranged the breakpoints 1102 may effectively mitigate the issue of uneven heating in the electric heating film 10.

In another example, the arrangements of electrode contacts are not limited to both ends of first electrode strips, but may also be set at any other position on a pair of first electrode strips.

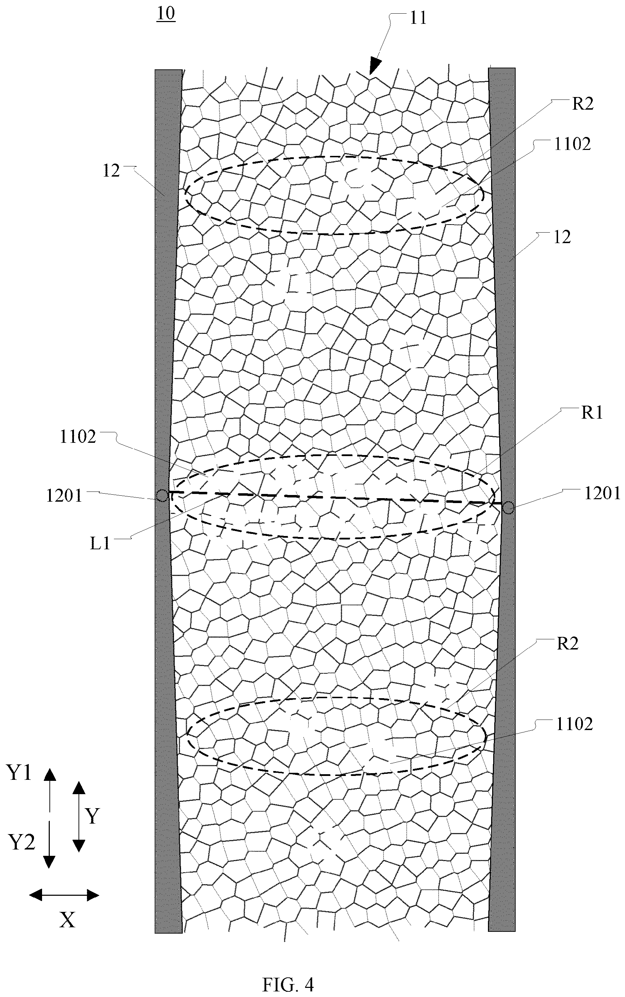

FIG. 4 is a schematic diagram of another embodiment of the present disclosure, the electrode contacts 1201 may be disposed at the middle of the first electrode strips 12. In the first conductive mesh 11, breakpoints 1102 may be distribute to gradually decrease along a third direction Y (i.e., the Y1 side and the Y2 side as illustrated in FIG. 4), which is orthogonal to a first connecting line L1, from the area close to the first connecting line L1 towards the area away from the first connecting line L1 (as shown in R1 and R2 in FIG. 4), which results in fewer effective conduction paths in the first conductive mesh 11 close to the first connecting line L1 along the third direction Y. Consequently, while the area near the first connecting line L1 does not overheat and damage the supporting structure. Thus, the overall heating rate of the first conductive mesh 11 and the heating temperature may relatively simultaneously reach the desired level. Through the above implementation, the arranged the breakpoints 1102 may effectively mitigate the issue of uneven heating in the electric heating film 10.may

In one example, referring again to FIG. 3, along a third direction Y, the resistance of each first electrode strip 12 increases as the distance to the electrode contact 1201 of the first electrode strip decreases, as a possible implementation, along the third direction Y, the width and/or thickness of each first electrode strip 12 decreases as the distance to the electrode contacts 1201 of the first electrode strip decreases.

When a electrode contact 1201 is set at the end of the first electrode strip 12, the part near the electrode contact 1201 of the first electrode strip 12 is designed to be narrow and/or thin, to reduce the resistance of the part near the electrode contacts 1201 in the first electrode strips 12, thereby reducing the current entering a first conductive mesh 11, lowering heating rate and heating temperature in the area where a first connecting line L1 linking the electrode contacts 1201 in the first conductive mesh 11 is located; the first electrode strips gradually increases in width and/or thickness from the position near the electrode contacts 1201 to the position far from the electrode contacts 1201, so that the current flowing into the first conductive mesh 11 via the first electrode strips 12 also gradually increases, thereby gradually increasing the heating rate of the first conductive mesh 11 as the distance to the first connecting line L1 between electrode contacts of the first electrode strips increases.

In this example, since the electrode contacts 1201 are located at the end of the first electrode strips 12, the first electrode strips 12 may gradually transition from narrow to wide and/or from thin to thick starting from the position of the electrode contacts 1201. This configuration helps to further mitigate the issue of uneven heating of an electric heating film 10. Thus, in conjunction with the application of breakpoints 1102 within the first conductive mesh 11, the overall heating rate of the first conductive mesh 11 and the heating temperature may relatively simultaneously reach the desired level.

In one example, referring again to FIG. 4, when electrode contacts 1201 are set in the middle of a pair of first electrode strips 12, the part of the first electrode strips 12 near the electrode contacts 1201 is set to be narrow and/or thin to reduce the resistance of the part of the first electrode strips 12 near the electrode contacts 1201, thereby reducing the current entering a first conductive mesh 11 from this. Consequently, it lowers both the heating rate and the heating temperature in the area of the first conductive mesh 11 where a first connecting line L1 linking the electrode contacts 1201 is located; the first electrode strips gradually increase in width and/or thickness from the position near the electrode contacts 1201 to the position away from the electrode contacts 1201, so that the current flowing into the first conductive mesh 11 via the first electrode strips 12 also gradually increases, thereby causing the heating rate of the first conductive mesh 11 to gradually increase as the distance to the first connecting line L1 between electrode contacts of the second electrode strips increases.

In this example, due to the position change of the electrode contacts 1201, the first electrode strips 12 may gradually transition from the position of the electrode contacts 1201 to a shape that is narrow in the middle and wide at both ends and/or thin in the middle and thick at both ends. Through the above implementation, it is beneficial to further mitigate the problem of uneven heating of an electric heating film 10. Thus, in conjunction with the application of breakpoints 1102 within the first conductive mesh 11, enabling the entire first conductive mesh 11 to achieve both the target heating rate and temperature uniformity simultaneously.

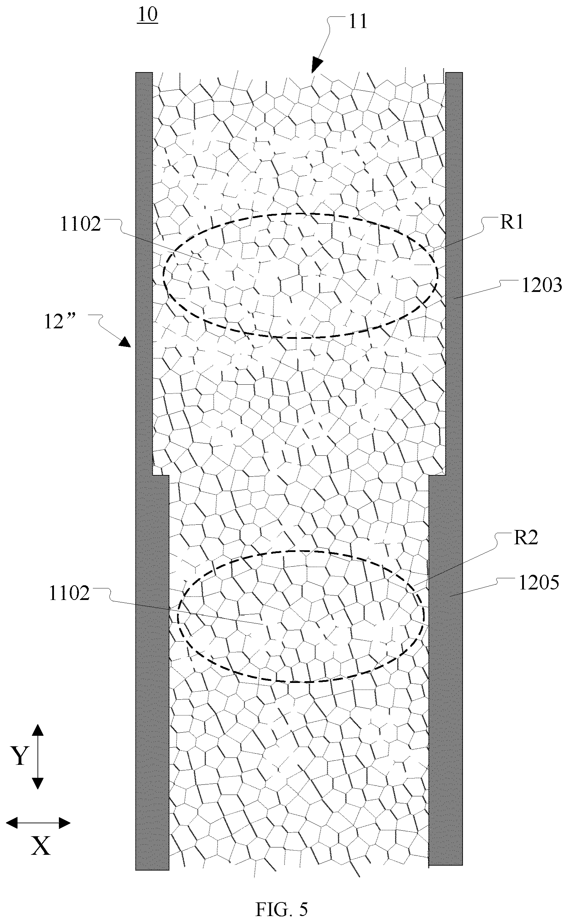

In one example, as shown in FIG. 5, each first electrode strip 12 has a first segment 1203 and a second segment 1205; along a third direction Y, the first segment 1203 of each first electrode strip 12 is closer to its electrode contacts 1201 than the second segment 1205; the resistance of the second segment 1205 is lower than that of the first segment 1203. The resistance of the first segment 1203 and the second segment 1205 may transition in step wise manner. For example, the first segment 1203 adjacent to the electrode contacts 1201 may be designed to be thin and/or narrow, so that the current flowing into a first conductive mesh 11 via the first segment 1203 is relatively less, thereby lower the heating rate and heating temperature of the heating area in the corresponding heating zone of the first conductive mesh 11 associated with the paired first segments 1203. Conversely, the second segment 1205, being farther from the electrode contact than the first segment, is constructed to be thicker and/or wider, thereby increasing the current flowing into the first conductive mesh 11 via the second segment 1205, which elevates the heating rate and heating temperature of the heating area of the first conductive mesh 11 corresponding to the two second segments 1205 of the first electrode strips 12. Through the above implementation, it is beneficial to further mitigate the issue of uneven heating of an electric heating film 10. Thus, in conjunction with the application of breakpoints 1102 within the first conductive mesh 11, enabling the entire first conductive mesh 11 to achieve both the target heating rate and temperature uniformity simultaneously.

In other examples, a first segment 1203 of the first electrode strips 12 may be located in the middle position of the first electrode strips 12, and a second segment 1205 may be multiple.

In other examples, a pair of first electrode strips may also be set so that the resistance value of the conductive materials used decreases as it moves away from electrode contacts.

In other examples, the positions of electrode contacts of a pair of first electrode strips do not need to correspond one-to-one, for example, the electrode contact at the end of one first electrode strip corresponds to the electrode contact at the middle position of another first electrode strip, the implementation method and beneficial effects are the same as the above embodiments, and will not be repeated here.

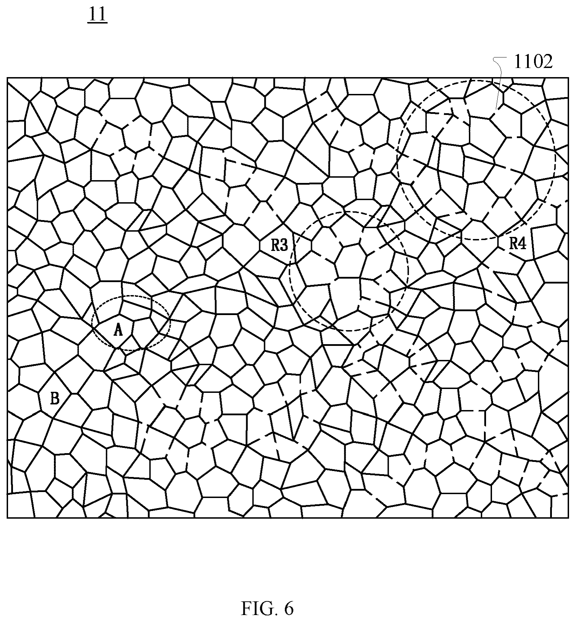

FIG. 6 is a schematic diagram of another embodiment of the present disclosure, as shown in FIG. 6, a first conductive mesh 11 has a first area A and a second area B. That is, in the first conductive mesh 11, except for the first area A, the others belong to the second area B. In the second area B, the density of the plurality of breakpoints gradually decreases as it approaches the first area A. In other words, in the second area B, the density of the plurality breakpoints in the first conductive mesh 11 gradually increases as the distance to the first area A increases (as shown by R3 and R4 in FIG. 6).

According to an electric heating film provided by the present disclosure, the lines of the first conductive mesh 11 are relatively thin and densely distributed, so the entire area covered by the electric heating film may be quickly heated without requiring excessively high temperatures, thereby quickly melting the ice/snow in the entire area. In addition, since the density of the plurality of breakpoints in the second area B gradually decreases as it approaches the first area A, the heating rate of the electric heating film in the second area B gradually increases as the distance to to the first area A decreases. As a result, the heating effect becomes better. This structure may be better applied to certain applications, such as melting the ice/snow covering a protective layer 14, or melting the ice/snow in a radar aperture zone of a vehicle.

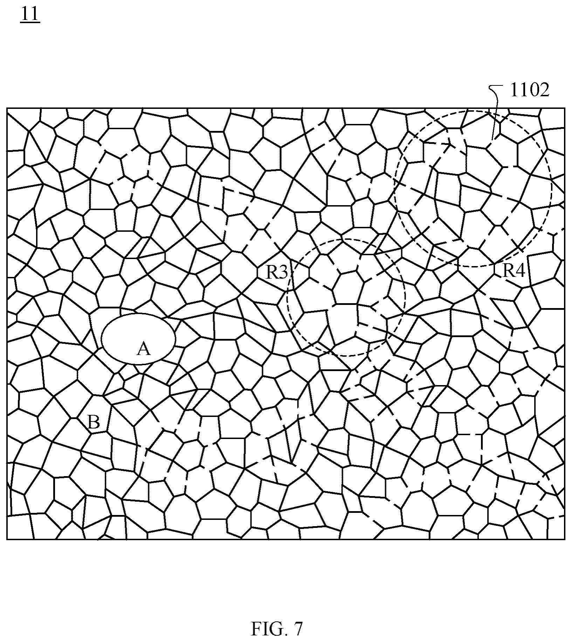

FIG. 7 is a schematic structural diagram according to another embodiment of the present disclosure. An electric heating film provided in this embodiment is configured to be attachable to an area in which a radar transmitting surface of a vehicle is disposed, and a first area A is adaptively aligned with the radar aperture zone. In this embodiment, a first conductive mesh 11 circumvents the first area A. That is to say, the first conductive mesh 11 is arranged in a second area B but not in the first area A. That is to say, there is no first conductive mesh 11 in the first area A. It should be understood that the shape and size of the first area A may be determined by the shape and size of the radar aperture zone, which is not specifically limited in the embodiments of the present disclosure. In addition, in this embodiment, in the second area B, the density of the circuit breakpoints gradually decreases as the distance to the first area A decreases(as shown in R3 and R4 in FIG. 7).

The first conductive mesh 11 circumvents the first area A, and when in use, the first area A is aligned with a signal transmission aperture of the radar, so the electric heating film does not or minimally blocks the transmission signal of the radar, thereby the electric heating film does not or minimally weakens the transmission signal of the radar. Thus, this structure is beneficial for ensuring the strength of the transmission signal of the radar when using the electric heating film.

After the vehicle starts, it is necessary to quickly melt ice/snow on the radar aperture zone, that is, to quickly melt the ice/snow over the first area A. Since the first area A does not contain the first conductive mesh 11, it is necessary to rely on the heat transferred from the second area B to melt the ice/snow over the first area A, so a part of the second area B close to the first area A needs to heat up quickly. According to the electric heating film provided by this disclosure, the breakpoints density of the first conductive mesh 11 in the second area B gradually decreases as it approaches the first area A, which makes the part of the second area B close to the first area A heat up faster, thereby quickly melting the ice/snow over the first area A. In addition, according to this structure, although the part of the second area B close to the first area A heats up faster, the thermal energy needs to be transferred to the first area A to elevate temperature of the first area A, which makes the temperature distribution of the entire electric heating film relatively uniform.

As a possible implementation, the connector of the electric heating film provided in this embodiment is configured for connecting to the control unit of the vehicle. The first conductive mesh 11 may be configured to switch, under the control of the control unit, between a first operating mode and a second operating mode. When the first conductive mesh 11 is in the first operating mode, the first conductive mesh 11 generates heat; when the first conductive mesh 11 is in the second operating mode, the first conductive mesh 11 functions as a receiving antenna for the radar.

When the control unit is switched to the first operating mode, the first conductive mesh 11 is energized accordingly, performing the task of heating the target area, and when the control unit is switched to the second operating mode, correspondingly, the breakpoints 1102 arranged in the first conductive mesh 11 reduce the interference of the current with the radar signal. At this time, the mesh apertures of the second area B which is densely distributed around the first area A of the first conductive mesh, provide a certain gain effect for electromagnetic waves due to their conductive properties. Thereby enhancing the signal reception strength.

In one example, refer to FIG. 6 again, an electric heating film may be used to heat a lamp. In this example, the electric heating film may be configured to be attachable to the lamp, and a first area A is optically aligned with a light source of the lamp. The density of the plurality of breakpoints 1102 in the first area A is lower than that in a second area B.

When starting the vehicle at night, if the lamp is covered by ice/snow, it will seriously affect the lighting effect, thereby causing safety issues. According to the above implementation, in the first conductive mesh 11, the density of the plurality of breakpoints 1102 in the first area A is less than that of the breakpoints 1102 in the second area B, which makes the first area heat up A faster. When in use, aligning the first area A with the light source of the lamp may ensure that the ice/snow blocking the light source are quickly melted, thereby shortening the starting time of the vehicle and ensuring driving safety.

The line width of the first conductive mesh 11 may be, for example, less than or equal to 1-12 µm. For visual perspective, a narrower line width may achieve invisibility to the naked eye, resulting in an overall transparent appearance and enhancing aesthetic appeal.

The average value of the aperture sizes (i.e., the circumcircle diameter of the mesh apertures) of the first conductive mesh 11 ranges from 50 µm to 2000 µm, which may be 50 µm, 60 µm, 70 µm, 80 µm, 90 µm, 100 µm, 200 µm, 300 µm, 400 µm, 500 µm, 600 µm, 700 µm, 800 µm, 900 µm, 1000 µm, 1100 µm, 1200 µm, 1300 µm, 1400 µm, 1500 µm, 1600 µm, 1700 µm, 1800 µm, 1900 µm, or 2000 µm. On one hand, this approach prevents the temperature drop caused by excessively large line spacings, and on the other hand, this approach avoids reduced overall transparency of the electric heating film due to optical merging of adjacent lines. In other words, by adopting the above ranges, the specified range optimally balances heating rate and visual performance.

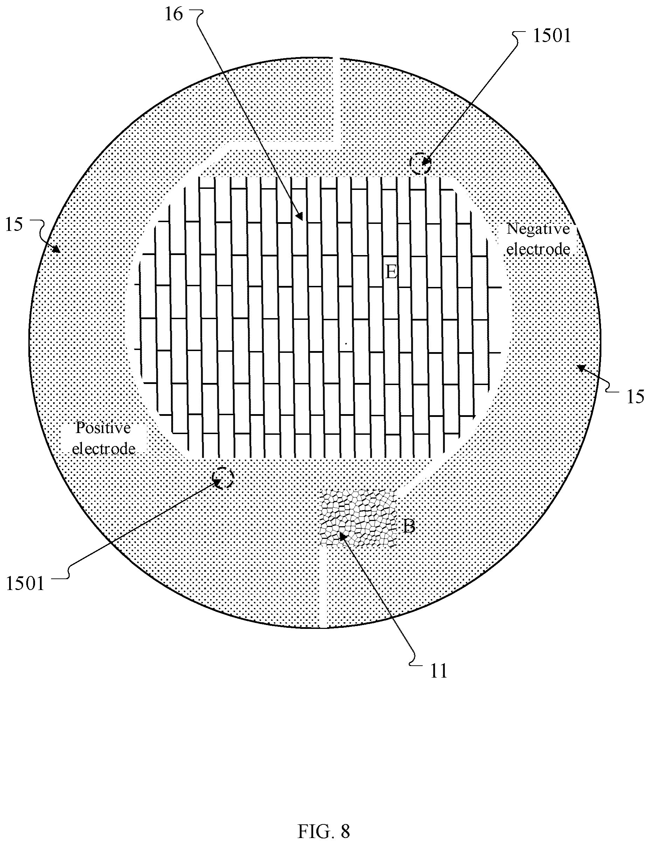

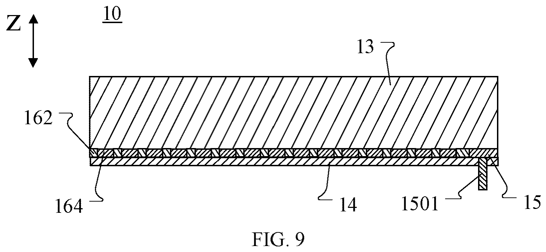

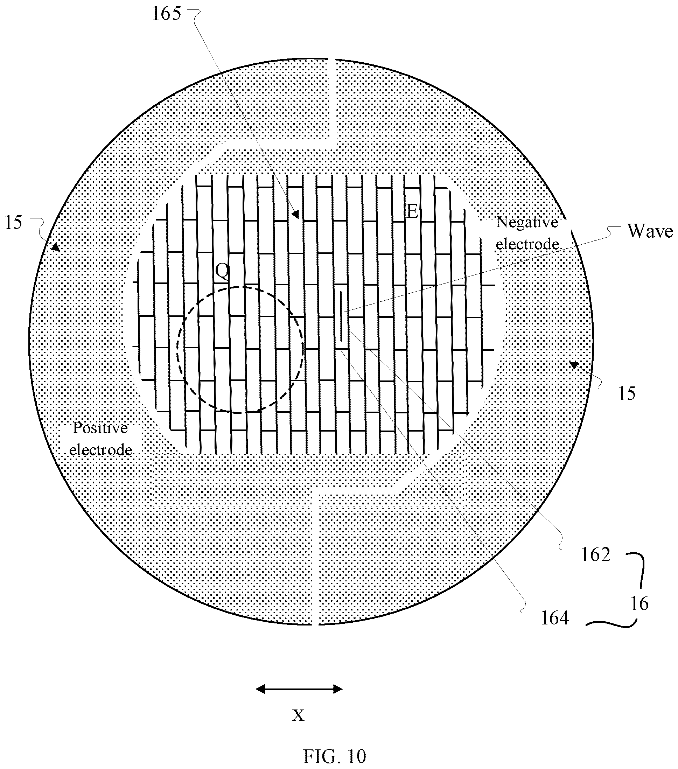

As shown in FIGs 8-12, an electric heating film 10 further includes a second conductive mesh 16 (as shown in FIG. 8), a pair of second electrode strips, a substrate 13 and a heating device. The second conductive mesh 16 is electrically connected to a first conductive mesh 11, a substrate 13 further includes a radar area E, the radar area is used to align with the window of millimeter-wave radar, and the second conductive mesh 16 is formed on the radar area E. FIG. 9 shows a schematic cross-sectional view of a second conductive mesh 16 of an electric heating film 10. The second electrode strips 15 are disposed on two ends of the second conductive mesh 16 and configured to generate heat under an energized condition, the second conductive mesh 16 includes first conductive wires 162 and second conductive wires 164. The first conductive wires 162 are arranged along a second direction X orthogonal to the first direction Z, any two adjacent first conductive wires 162 among the first conductive wires are electrically connected by at least one second conductive wire 164. The heating device is located on one side of the substrate 13 in the thickness direction. The substrate 13 has a radar area E, the radar area E is used to align with the window of a millimeter-wave radar (e.g., including models such as 24 GHz, 77 GHz, 79 GHz), allowing certain waves to pass through this area to the millimeter-wave radar. The second electrode strips 15 are arranged on the plane defined by the second conductive mesh 16, located on both sides of the second conductive mesh 16 (as shown in FIG. 10, the left side is the positive electrode, the right side is the negative electrode), and attached to part of the edge of the second conductive mesh 16. The second conductive mesh 16 is set on radar area E, the second electrode strips 15 are attached to both ends of the second conductive mesh 16, suitable for heating the second conductive mesh 16 under an energized condition. thereby melting the ice and snow covering the radar area E of the electric heating film 10. This ensures unimpeded passage for the millimeter-wave radar's waves. The second conductive mesh 16 includes first conductive wires 162 arranged along the second direction X, the second conductive mesh 16 further includes second conductive wires164 arranged along the second direction X, any two adjacent first conductive wires 162 are electrically connected by at least one second conductive wire 164. The first conductive wires 162 may be parallel to each other or have an angle on the plane defined by the first conductive wires 162, but the first conductive wires 162 are not directly connected to each other.

The extension direction of any one of the first conductive wires 162 is roughly parallel to the projection of the waves transmitted and received by millimeter-wave radar on the plane defined by the first conductive wires 162, preventing excessive interruption of the waves passing through the electric heating film 10 to and from the millimeter-wave radar.

For example, the second electrode strips 15 are electrically connected to a vehicle power supply through electrode contacts 1501.

For example, the substrate 13 may be made of materials with good light transmittance and non-conductivity, such as PC (polycarbonate), PET (polyethylene glycol terephthalate), or glass.

The second conductive mesh 16 may be patterned on the substrate 13, for example, by etching, in other examples, it may also be formed on the substrate 13 by laying.

The first conductive wires 162 and the second conductive wires 164 may be made of materials with good flexibility, low cost, and good ductility, such as copper.

The electric heating film 10 may also have a protective layer 14, which may cover the side of the second conductive mesh 16 away from the substrate 13, serving to protect the second conductive mesh 16 and prevent open circuits caused by exposure to air.

The line width of the first conductive wire 162 and the second conductive wire 164 may be, for example, 1-12 µm. For visual perspective, a narrower line width may achieve invisibility to the naked eye, resulting in an overall transparent appearance and enhancing aesthetic appeal. furthermore, a narrower line width provides a smaller radar signal (i.e., waves traveling to and from millimeter-wave radar) occlusion area.

This disclosure arranges a second conductive wire 164 between two first conductive wires 162, enabling the two first conductive wires 162 to be interconnected through at least one second conductive wire 164. In this way, the current flowing through the first wire 162 has a chance to flow into the second conductive wire 164 before the interruption point S when encountering it, and then flow into the adjacent first conductive wire 162. This ensures that the segment of the first conductive wire 162 before the interruption point S remains conductive, ensuring the area covered by this segment of the first conductive wire 162 is heated. This correspondingly improves the heating uniformity of the electric heating film 10 on the radar window. As the number of second conductive wires 164 increases, multiple disconnected segments of first conductive wires (caused by breaks) 162 may also become conductive. Consequently, the heating uniformity of the electric heating film 10 on the radar window progressively improves. This also enhances the production yield of the electric heating film 10. Thus, even when the first conductive wires 162 in the electric heating film 10 are designed with finer diameters and narrower spacing, a balanced optimization may be achieved between radar signal blockage area and heating uniformity on the radar window.

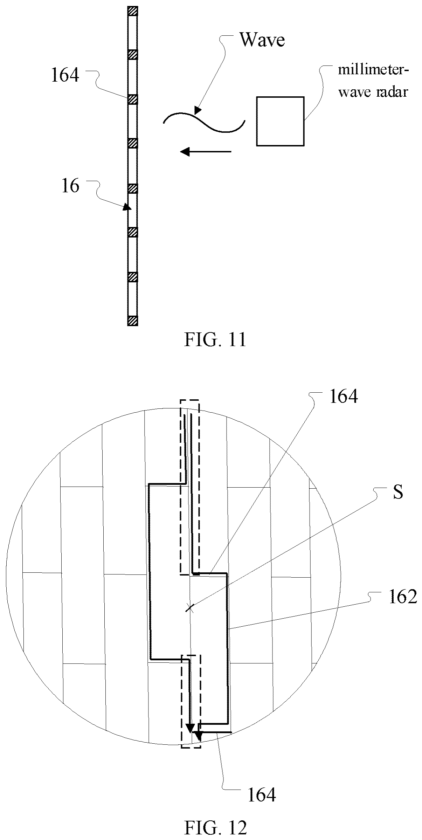

As shown in FIG. 12, there is a truncation S in a first conductive wire 162, dividing the first conductive wire 162 into two segments, current flows from a first segment of the first conductive wire 162 through a first second conductive wire 164, the adjacent first conductive wire 162, and the second conductive wire 164 into a second segment of the first conductive wire 162 in a mesh aperture 165, and then flows to the output electrode strip, as indicated by the arrows. Thus, in each mesh aperture 165, current has two conduction directions. Thereby increasing the heating uniformity of an electric heating film 10 for a radar window. The dashed box in the figure indicates the part of the first conductive wire 162 with the truncation S that conducts current. As more mesh apertures are incorporated, additional discontinuous segments of first conductive wires 162 caused by truncation S become interconnected. Consequently, the heating uniformity of the electric heating film 10 on the radar window progressively improves.

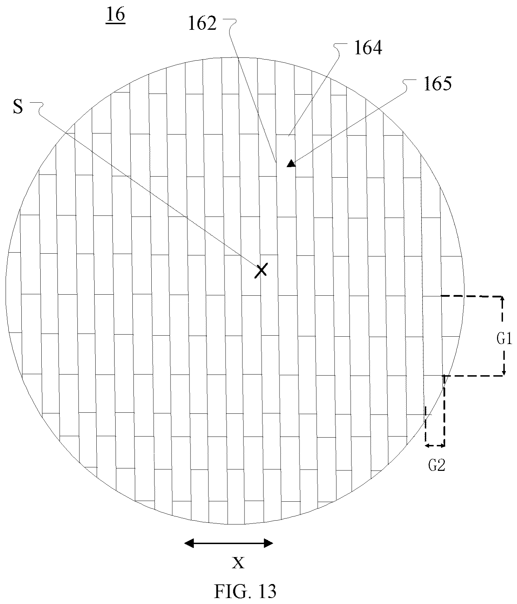

In an exemplary embodiment, as shown in FIG. 13, a second conductive mesh 16 is a grid mesh 16 including mesh apertures 165, each mesh aperture 165 is formed by two adjacent first conductive wires 162 and two adjacent second conductive wires 164 connected to the two adjacent first conductive wires 162. The grid mesh16 is composed of rectangular mesh apertures 165. Any two adjacent first conductive wires 162 are electrically connected by at least two second conductive wires 164.

When a truncation S occurs in a first conductive wire 162, the two second conductive wires 164 in the mesh aperture 165 where the truncation S is located may increase the possibility of connecting the segments of the first conductive wire 162 on both sides of the truncation S. This enhances the heating uniformity of the electric heating film 10 across the radar window. As the number of the mesh apertures 165 arrangements increases, the plurality discontinuous segments of the first wire 162 caused by truncations S can be reconnected, the heating uniformity of the electric heating film 10 on the radar window further improves.

Preferably, in each mesh aperture 165, the two adjacent second conductive wires 164 are parallel to each other, and the distance between them defines a first distance G1, where the first distance G1 is 1/8 to 3 times the wavelength of a millimeter-wave radar.

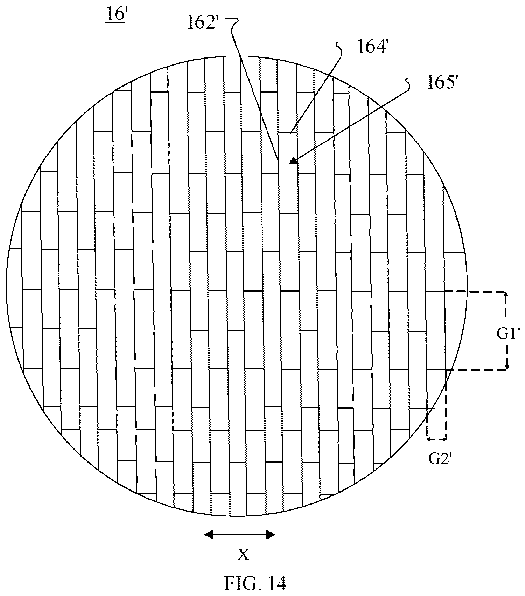

Within the first distance G1 range provided in this disclosure, the grid mesh structure ensures minimal wave transparency, thereby meeting the radar wave transparency and reception needs, while ensuring the minimum conduction effect of the grid mesh, i.e., it fulfills the basic conditions required for conductivity. In an exemplary embodiment, as shown in FIGs. 14-16, a second conductive mesh 16 is a grid mesh16' including mesh apertures 165', each mesh apertures 165' are formed by two adjacent first conductive wires 162' and two adjacent second conductive wires 164' connected to the two adjacent first conductive wires 162', along a second direction X, the adjacent mesh apertures 165' are arranged alternately. That is, along the second direction X, each mesh aperture 165' is not aligned with the adjacent next mesh aperture 165', meaning that the second conductive wire 164' of each mesh aperture 165' is not directly connected to the second conductive wire 164' of the adjacent next mesh aperture 165'.

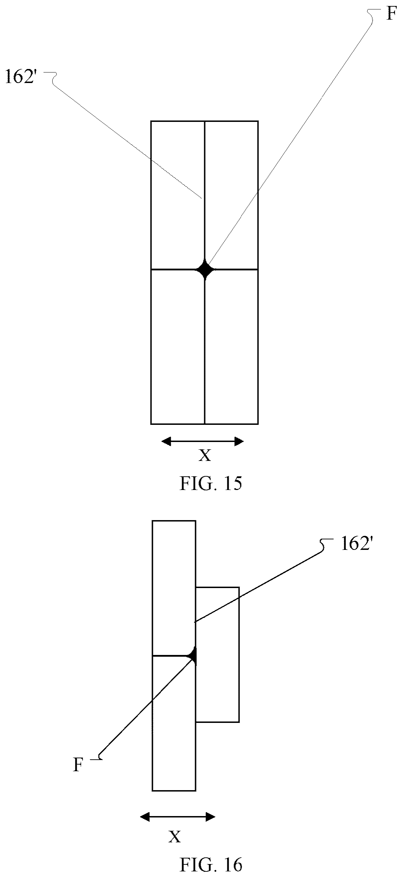

On the second direction X, the adjacent mesh apertures are arranged in a staggered manner. ensuring that only one second conductive wire is connected at any position on the first conductive wire, resulting in each intersection being a "T"-shaped intersection. Compared to a "cross"-shaped intersection, the " webbed " structures F at the "T"-shaped intersection has a smaller area, thereby reducing the likelihood of the " webbed " structures being noticeable to the human eye at the intersections. As shown in FIG. 15 and FIG.16.

Illustratively, referring again to FIG. 14, a mesh aperture 165' is rectangular. Since the signal emitted by millimeter-wave radar is a sinusoidal wave signal, the projection of the sinusoidal wave signal on a grid mesh 16' appears as a straight line when passing through the grid mesh. Given that the first conductive wires 162' are straight and parallel to each other, the orientation of the first conductive wires may be aligned parallel to the projection direction of the sinusoidal wave signal on the grid mesh 16'. Therefore, the first conductive wires 162' arranged in the same direction allow millimeter-wave radar signals to pass through an electric heating film 10 to a great extent without being interrupted by the first conductive wires 162'.

Preferably, in a grid mesh 16', all rectangular mesh apertures 165' are of equal size to ensure the heating uniformity of the grid mesh 16' and the uniformity of the wave transparent performance across all part of the grid mesh 16'.

Preferably, referring again to FIG. 14, in the mesh aperture 165', the distance between two second conductive wires 164' defines a first distance G1', and the distance between two adjacent first conductive wires 162' defines a second distance G2', where the first distance G1'is 2.5 mm and the second distance G2' is 0.2 mm. Through testing, taking input voltages of 12V and 14V as examples, 2.5 mm first distance and 0.2 mm second distance G2' may allow millimeter-wave radar waves of various wavelengths (especially 77 GHz millimeter-wave radar) to pass through the mesh aperture 165', while maintaining high heating uniformity of the electric heating film 10 on the radar window.

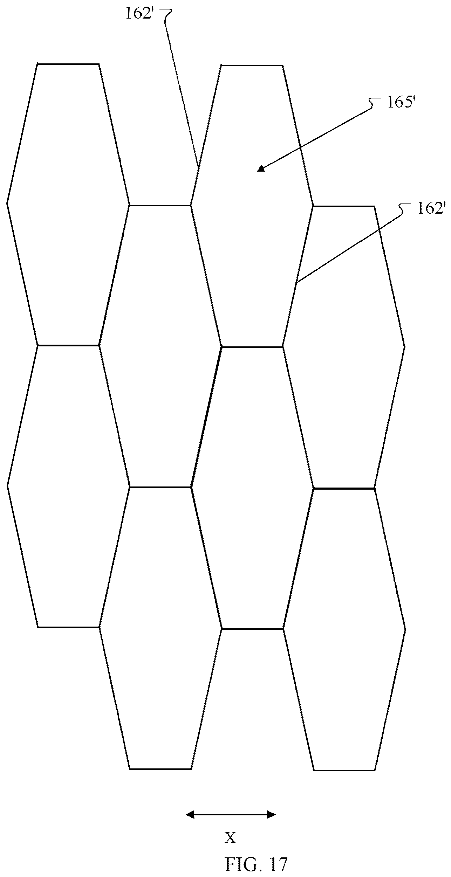

In an exemplary embodiment, as shown in FIG. 17, a mesh aperture 165' is hexagonal. In some embodiments, two first conductive wires 162' in a mesh aperture 165' may be bent along a second direction X in the same orientations or in opposite orientations.

During the etching process, the longer the straight line, the greater the possibility of a break. To ensure the visual effect and wave transmission of a grid mesh without increasing second conductive wires, the grid mesh16' is set to hexagonal, increasing the number of bent edges to reduce the possibility of truncations.

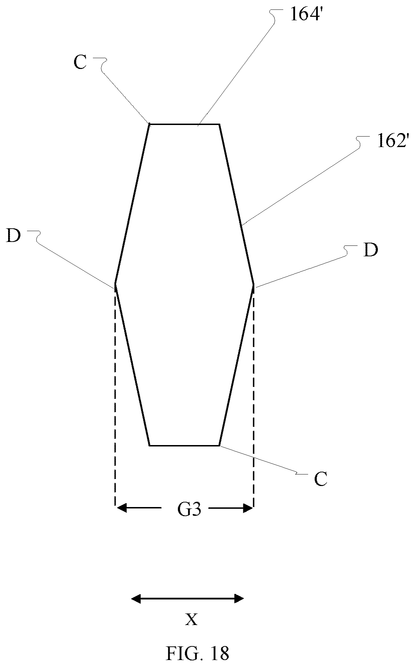

Preferably, as shown in FIG. 18, in the mesh aperture, the angle between any adjacent edges is less than 180°. Two first conductive wires 162' are bent along a second direction X in orientations away from each other. This allows the mesh aperture 165' to increase the area of the mesh aperture 165' while maintaining the length of a second conductive wire 164' and the distance between the two second conductive wires 164'. While maintaining a high conduction effect in a grid mesh 16', the wave transmission rate of the mesh aperture 165' is improved.

Preferably, in one grid mesh 16', the size of each hexagonal mesh aperture 165' is equal to ensure the heating uniformity of the grid mesh 16' and the uniformity of the wave transmission effect of each part of the grid mesh 16'. At the same time, due to the staggered arrangement of the grid mesh 16', each intersection of the wires is connected to at most 3 segments of the wires, making the "webbed" structures structure at the intersection smaller and less noticeable to the human eye, ensuring the visual effect of the grid mesh 16'.

Preferably, referring again to FIG. 18, in the mesh aperture 165', a third distance G3 is defined by a distance between two hexagonal vertices on the two first conductive wires 162', where the vertices are positioned between the two second conductive wires 164', the third distance G3 is twice the length of the second conductive wire 164'. The four vertices C in the hexagonal mesh aperture 165' are formed by the intersection of the first conductive wire 162' and the second conductive wire 164'. The other two vertices D are formed by bending first conductive wire 162', and the distance between the two vertices F is the third distance G3. Tests have shown that under the same etching conditions, the third distance G3 and the length of the second conductive wire 164' in this relationship may maintain a high conduction effect for the grid mesh 16'. Thereby achieving an optimal balance between the radar signal's occlusion area and the heating uniformity of the electric heating film on the radar window.

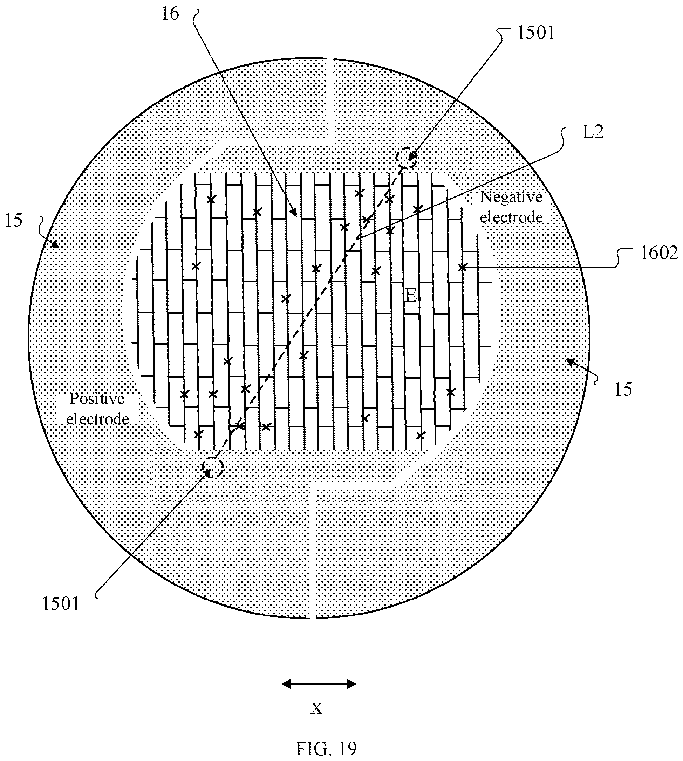

In an exemplary embodiment, as shown in FIG. 19, A plurality of breakpoints 1602 are distributed unevenly in the second conductive mesh 16. Along the third direction, the density of the plurality of breakpoints 1602 gradually increases as the distance to a second connecting line L2 (i.e., the shortest conduction path) between electrode contacts of the second electrode strips decreases. Conversely, the density of the plurality breakpoints1602 is smaller. The breakpoints 1602 arranged in this way ensure that when the region of the second conductive mesh 11 farther from the second connecting segment L2 achieves the desired heating effect, the area closer to the second connecting line L2 will not overheat and cause damage to the supporting structure supporting it. In addition, the closer to the position of the electrode contacts 1501, the greater the density of the plurality of breakpoints 1602, ensuring that when the region of the second conductive mesh 16 farther from the electrode contacts 1501 achieves the desired heating effect, the area closer to the electrode contacts 1501 will not overheat and cause damage to the supporting structure supporting it Thus, the overall heating rate and heating temperature of the second conductive mesh 16 may reach the desired level relatively simultaneously. Through the above implementation, the breakpoints 1602 arranged in this way may effectively mitigate the uneven heating problem of an electric heating film 10.

As an example, the breakpoints 1602 may be formed in a second conductive mesh 16 through a DUMMY method.

In an exemplary embodiment, continuing to refer to FIG. 19, the resistance of each second electrode strip 15 gradually increases as the distance to its electrode contact 1501 decreases.

A pair of second electrode strips 15 are electrically connected to a vehicle power supply via electrode contacts 1501, allowing the vehicle to power a second conductive mesh 16 through the electrode contact 1501s. That is, The second electrode strip 15 is connected to the electrode lead of the power supply at the electrode contact point 1501, the power supply is electrically connected to the second electrode strip 15. In one example, at least part of electrode contacts 1501 may be integrally formed with a pair of second electrode strips 15.

In the area containing the second connection line L2 of electrode contacts 1201 in first conductive mesh 11 has the shortest current path, resulting in the most rapid temperature rise and the highest heating level during operation. Under continuous heating, this L2-adjacent area may overheat and damage its supporting components before the ice/snow covering more distant sections fully melts.

As a possible implementation, along an extension direction of the second electrode strips 15, the width and/or thickness of each second electrode strip 15 decreases as the distance to the electrode contact 1501 of the second electrode strip decreases.

When the electrode contacts 1501 are set at the end of the second electrode strips 15, the part of the second electrode strips 15 near the electrode contacts 1501 is set to be narrow and/or thin to reduce the resistance of that part of the second electrode strips 15 close to the electrode contacts 1501, thereby reducing the current flowing into a second conductive mesh 16 from here, reducing the heating rate and heating temperature in the area of the second conductive mesh 16 where a second connecting line L2 linking the electrode contacts 1501 is located; the second electrode strips 15 gradually increase in width and/or thickness from the position close to the electrode contacts 1501 to the position away from the electrode contacts 1501, so that the current flowing into the second conductive mesh 16 via the second electrode strips 15 gradually increases. Consequently, as one moves away from the second connecting line L2 linking the electrode contacts 1501 in the second conductive mesh 16, the heating rate and heating temperature of the second conductive mesh 16 gradually increase.

In this example, since the electrode contacts 1501 are located at the end of the second electrode strips 15, the second electrode strips 15 may gradually transition from narrow to wide and/or from thin to thick starting from the position of the electrode contacts 1501. Through the above implementation, it is beneficial to mitigate the uneven heating problem of an electric heating film 10.

As a possible implementation, a second connecting line L2 passes through the center of a second conductive mesh 16, which is beneficial for achieving faster heating of the covered radar window and further improving the uneven heating issue of an electric heating film 10.

Other embodiments of the present disclosure also provide an electrical equipment, which includes an aforementioned electric heating film, allowing the aforementioned electric heating film to be attached to the electrical equipment (e.g., a display, etc.), facilitating quick startup in outdoor environments.

Other embodiments of the present disclosure also provide a vehicle lamp assembly. The vehicle lamp assembly includes a lamp and an aforementioned electric heating film, and the electric heating film may be attached to a lampshade of the lamp. The electric heating film may be adapted and processed according to the specific position of the lamp light source.

Other embodiments of the present disclosure also provide a radome, including an aforementioned electric heating film, facilitating rapid heating of the radome to melt the ice/snow covering it.

Other embodiments of the present disclosure also provide a vehicle. The vehicle includes an aforementioned electric heating film or includes an aforementioned vehicle lamp assembly. The electric heating film may be individually produced for a lamp or a radar to adapt to different types of the vehicle, or include an aforementioned radome, as well as different climate environments.

It should be understood that the term "including" and its variations used in this disclosure are open-ended, meaning "including but not limited to". The term "one embodiment" means "at least one embodiment", and the term "another embodiment" means "at least one additional embodiment".

In the description of this disclosure, it should be understood that the terms "first" and "second" are used for descriptive purposes only and should not be interpreted as indicating or implying relative importance or implicitly specifying the number of technical features indicated. Thus, features defined with "first" and "second" may explicitly or implicitly include at least one such feature. In the description of this disclosure, the term "plurality" means at least two, such as two, three, etc., unless otherwise specifically defined.

In the description of this specification, references to terms such as "one embodiment", "some embodiments", "example", "specific example", or "some examples" mean that specific features, structures, materials, or characteristics described in the embodiment or example are included in at least one embodiment or example of this disclosure. In this specification, the illustrative descriptions of the above terms do not necessarily refer to the same embodiment or example. Moreover, the specific features, structures, materials, or characteristics described may be combined in any one or more embodiments or examples in a suitable manner. Additionally, without mutual contradiction, those skilled in the art may combine and integrate the different embodiments or examples, as well as the features of different embodiments or examples, described in this specification.

Although the embodiments of this disclosure have been shown and described above, it should be understood that the above embodiments are exemplary and should not be construed as limiting the disclosure. Those of ordinary skill in the art may make changes, modifications, replacements, and variations to the above embodiments within the scope of this disclosure.

## Claims

1. An electric heating film, comprising:
a substrate; and
a first conductive mesh, patterned on a side of the substrate in a first direction, and configured to generate heat under an energized condition, wherein a plurality of breakpoints are distributed unevenly in the first conductive mesh.

2. The electric heating film of claim 1, further comprising a pair of first electrode strips electrically connected to the first conductive mesh, wherein the pair of first electrode strips are disposed on two sides of the first conductive mesh in a second direction orthogonal to the first direction, and the pair of first electrode strips extend along a third direction orthogonal to both the first direction and the second direction.

3. The electric heating film of claim 2, wherein, along the third direction, the density of the plurality of breakpoints gradually increases as a distance to a first connecting line connected between electrode contacts of the first electrode strips decreases.

4. The electric heating film of claim 2 or 3, wherein, along the third direction, a resistance of each first electrode strip increases as a distance to an electrode contact of the first electrode strip decreases.

5. The electric heating film of claim 4, wherein, along the third direction, a width of each first electrode strip decreases as the distance to an electrode contact of the first electrode strip decreases.

6. The electric heating film of claim 4, wherein, along the third direction, a thickness of each first electrode strip decreases as a distance to an electrode contact of the first electrode strip decreases.

7. The electric heating film of claim 4, wherein, along the third direction, a width and ae thickness of each first electrode strip decrease as a distance to an electrode contact of the first electrode strip decreases.

8. The electric heating film (10) of any one of claims 2 to 7, wherein each first electrode strip (12) comprises a first segment (1203) and a second segment (1205); for each first electrode strip (12), the first segment (1203) is closer to an electrode contact of the first electrode strip (12) than the second segment (1205) in the third direction, and a resistance of the second segment (1205) is lower than that of the first segment (1203).

9. The electric heating film of claim 1, wherein the electric heating film has a first area and a second area surrounding the first area, wherein in the second area, the density of the circuit plurality of breakpoints gradually decreases as a distance to the first area decreases.

10. The electric heating film of claim 9, wherein the electric heating film is configured to be attachable to an area in which a radar transmitting surface of a vehicle is disposed, wherein the first area is arranged to align with the radar aperture zone, and the first conductive mesh circumvents the first area.

11. The electric heating film of claim 10, further comprising a connector electrically connected to the first conductive mesh, and configured to be connected to a control unit of the vehicle, wherein the first conductive mesh is configured to switch, under control of the control unit, between:
- a first operating mode in which the first conductive mesh generates heat; and
- a second operating mode in which the first conductive mesh functions as a receiving antenna for the radar.

12. The electric heating film of claim 9, wherein the electric heating film is configured to be attachable to a vehicle lamp, wherein the first area is arranged to align with a light source of the lamp, and a density of the breakpoints in the first area is lower than a density of the breakpoints in the second area.

13. The electric heating film (10) of any one of claims 1 to 12, wherein a line width of the first conductive mesh (11) ranges from 1 µm to 12 µm.

14. The electric heating film (10) of any one of claims 1 to 13, wherein, the first conductive mesh (11) has apertures with an average aperture size ranging from 50 µm to 2000 µm.

15. The electric heating film of claim 1, further comprising a second conductive mesh, electrically connected to the first conductive mesh, wherein the second conductive mesh is formed within a radar area defined in the substrate and corresponding to a window of a millimeter-wave radar; and
a pair of second electrode strips, attached to two ends of the second conductive mesh and configured to generate heat under an energized condition,
wherein the second conductive mesh comprises: first conductive wires arranged along the second direction orthogonal to the first direction; and second conductive wires, wherein any two adjacent first conductive wires are electrically connected by at least one second conductive wire.

16. The electric heating film (10) of claim 15, wherein the second conductive mesh (16) is a grid mesh comprising mesh apertures (165), each mesh aperture (165) is formed by two adjacent first conductive wires (162) and two adjacent second conductive wires (164) connected to the two adjacent first conductive wires (162).

17. The electric heating film (10) of any one of claims 15 to 16, wherein, in each mesh aperture (165), the two adjacent second conductive wires (164) are parallel to each other, a distance between the two adjacent second conductive wires (164) define a first distance, wherein the first distance ranges from 1/8 to 3 times a wavelength of the radar.

18. The electric heating film of claim 15, wherein the second conductive mesh is a grid mesh comprising mesh apertures, each mesh aperture is formed by two adjacent first conductive wires and two adjacent second conductive wires connected to the two adjacent first conductive wires, wherein, along the first direction, the adjacent mesh apertures are arranged alternately.

19. The electric heating film of claim 18, wherein, the mesh aperture is rectangular.

20. The electric heating film (10) of any one of claims 18 to 19, wherein, in the mesh aperture, a distance between the two second conductive wires defines a first distance, the distance between the two first conductive wires defines a second distance, wherein the first distance is 2.5 mm, and the second distance is 0.2 mm.

21. The electric heating film of claim 18, wherein the mesh aperture is hexagonal.

22. The electric heating film of claim 21, wherein in the mesh aperture, an angle between any adjacent sides is less than 180°.

23. The electric heating film of any one of claims 21 to 22, wherein in the mesh aperture, a third distance is defined by a distance between two hexagonal vertices positioned on the two first conductive wires positioned between the two second conductive wires, and the third distance is twice a length of each second conductive wire.

24. The electric heating film of any one of claims 15 to 23, wherein a plurality of breakpoints are distributed unevenly in the second conductive mesh, wherein along the third direction, a density of the plurality of breakpoints gradually increases as a distance to a second connecting line between electrode contacts of the second electrode strips decreases.

25. The electric heating film (10) of any one of claims 15 to 24, wherein, a resistance of each second electrode strip (15) increases as the distance to an electrode contact of the second electrode strip (15) decreases.

26. An electrical equipment, comprising the electric heating film of any one of claims 1 to 8.

27. A vehicle lamp assembly, comprising:
a vehicle lamp; and
the electric heating film of claim 12, attached to a lampshade of the vehicle lamp.

28. A radome, comprising the electric heating film of any one of claims 15-25.

29. A vehicle, comprising the electric heating film of any one of claims 9 to 12, or the vehicle lamp assembly of claim 27, or the radome of claim 28.
